# EUROPEAN PATENT APPLICATION

(11) **EP 3 553 294 A2**
(43) Date of publication of application: **16.10.2019**
(21) Application number: 19162228.1
(22) Date of filing: 12.03.2019
(51) Int. Cl.: F02C 7/32, F02C 7/36

(54) **ACCESSORY GEARBOX**

(30) Priority: 12.04.2018 GB 201806028
(71) Applicant: Rolls-Royce plc, London SW1E 6AT (GB)
(72) Inventor: Edwards, David, Derby, Derbyshire DE24 8BJ (GB)
(74) Representative: Rolls-Royce plc

(57) **Abstract**

An accessory gearbox is disclosed for a ducted fan gas turbine engine. The engine has an engine core, a bypass duct, an engine principal rotational axis and a core annulus surrounding the engine principal rotational axis and radially disposed between the engine core and the bypass duct. The engine radial direction is defined as perpendicular to and intersecting the engine principal rotational axis. The accessory gearbox is for location in the core annulus. The accessory gearbox has a sequence of spur gears for driving engine accessories. For each spur gear, the spur gear is mounted for rotation about a respective spur gear rotational axis that is non-parallel with the engine principal rotational axis, the spur gear rotating within a respective spur gear rotational plane perpendicular to the spur gear rotational axis, the spur gear rotational plane intersecting said spur gear, wherein the spur gear rotational plane is offset with respect to the engine radial direction. Also disclosed is a corresponding accessory gearbox having at least one bevel gear for driving an engine accessory mounted to the accessory gearbox, the at least one bevel gear having a bevel gear rotational axis that extends obliquely with respect to the spur gear rotational axes.

## Description

The present disclosure relates to an accessory gearbox for a gas turbine engine such as a ducted fan gas turbine engine.

In known aero gas turbine engines, accessory gearboxes provide mechanical power to engine-driven accessories. The accessory gearbox provides a mount for the accessories and distributes mechanical power to, or from, each accessory unit. Power is transmitted to the accessory gearbox from the engine typically via an internal gearbox. The internal gearbox typically includes a bevel gear linked to a rotor of the engine (e.g. at one of the compressor stages of the engine) and a radial drive shaft is linked to the accessory gearbox via suitable gearing.

The starter may also be mounted at the accessory gearbox, and so the radial drive shaft and internal gearbox may also transmit power from the accessory gearbox to the engine during engine start.

The accessory gearbox is typically wrapped around the fan case and enclosed within the engine nacelle. The accessory gearbox is therefore typically crescent-shaped, in order to present a low frontal area and permitting suitable streamlining of the engine cowl.

The accessories may be engine-related accessories or aircraft-related accessories. Typical engine-related accessories mounted at the accessory gearbox include the starter, fuel pump, oil pump, alternator and breather. Typical aircraft-related accessories mounted at the accessory gearbox include generators and hydraulic pumps.

The accessories are driven by an arrangement of spur gears arranged along the accessory gear box.

The accessories are each driven about a respective rotational axis. In the arrangement described above, in which the crescent-shaped accessory gearbox is wrapped around the fan case, the rotational axes of the accessories are parallel to the principal rotational axis of the engine. Similarly, the rotational axes of the spur gears in the accessory gearbox are parallel to the principal rotational axis of the engine.

It is typical for the accessory gearbox to be located at the underside of the engine, to allow for ease of maintenance by ground crews.

In some ducted fan gas turbine engines, it may be advantageous for the accessory gearbox to be located elsewhere than wrapped around the fan case. For example, it may be required for the accessory gearbox to be located closer to the core of the engine. The accessory gearbox may therefore be located in the core annulus, which is an enclosed annular space surrounding the core and located internally of the bypass duct.

However, the curvature of the core annulus is tighter than the curvature outside of the fan casing. Furthermore, the radial width of the core annulus is restricted by the core on one side and by the bypass duct on the other side. Accordingly, there is restricted space available for the accessory gearbox and for the accessories connected to the accessory gearbox.

According to a first aspect there is provided an accessory gearbox for a ducted fan gas turbine engine, the engine having an engine core, a bypass duct, an engine principal rotational axis and a core annulus surrounding the engine principal rotational axis and radially disposed between the engine core and the bypass duct, wherein an engine radial direction is defined as perpendicular to and intersecting the engine principal rotational axis, wherein:
the accessory gearbox is for location in the core annulus,
the accessory gearbox has a sequence of spur gears for driving engine accessories,
for each spur gear, the spur gear is mounted for rotation about a respective spur gear rotational axis that is non-parallel with the engine principal rotational axis, the spur gear rotating within a respective spur gear rotational plane perpendicular to the spur gear rotational axis, the spur gear rotational plane intersecting said spur gear, wherein the spur gear rotational plane is offset with respect to the engine radial direction.

An effect of the first aspect therefore is that the spur gear rotational planes are offset from a radial direction of the engine. In this way, the accessory gearbox can be offset from a radial direction of the engine.

According to a second aspect there is provided an accessory gearbox for a ducted fan gas turbine engine, the engine having an engine core, a bypass duct, an engine principal rotational axis and a core annulus surrounding the engine principal rotational axis and radially disposed between the engine core and the bypass duct, wherein an engine radial direction is defined as perpendicular to and intersecting the engine principal rotational axis, wherein:
the accessory gearbox is for location in the core annulus,
the accessory gearbox has a sequence of spur gears, and for each spur gear, the spur gear is mounted for rotation about a respective spur gear rotational axis that is non-parallel with the engine principal rotational axis,
the accessory gearbox has at least one bevel gear for driving an engine accessory mounted to the accessory gearbox, the at least one bevel gear having a bevel gear rotational axis that extends obliquely with respect to the spur gear rotational axes.

An effect of the second aspect therefore is that the engine accessory can extend obliquely from the accessory gearbox in order to be accommodated in the tightly curving core annulus of the engine.

According to a third aspect there is provided a ducted fan gas turbine engine incorporating an accessory gearbox according to the first aspect, wherein the accessory gearbox is located in the core annulus of the engine.

According to a fourth aspect there is provided a ducted fan gas turbine engine incorporating an accessory gearbox according to the second aspect, wherein the accessory gearbox is located in the core annulus of the engine.

Optional features of the present disclosure will now be set out. These are applicable singly or in any combination with any aspect of the present disclosure.

The first and second aspects may be combined with other, with the effect that the accessory gearbox can be offset from a radial direction of the engine and an engine accessory can extend obliquely from the accessory gearbox.

The accessory gearbox may have a plurality of engine accessories mounted thereon. A first engine accessory has a first axial length. A second engine accessory has a second axial length, shorter than the first axial length. In view of the manner in which the accessory gearbox may be disposed offset from a radial direction of the engine, the first engine accessory can be mounted on the accessory gearbox to take account of the greater space available in the core annulus on a first side of the accessory gearbox than on a second side of the accessory gearbox. In this case, the first and second engine accessories may be driven by respective spur gears of the accessory gearbox.

There may be a group of said first engine accessories, having longer axial lengths than a group of said second engine accessories. In that case, the first engine accessories may be mounted on the same side of the accessory gearbox and the second engine accessories may be mounted on the opposite side of the accessory gearbox.

The accessories may be selected from the group consisting of:
starter, fuel pump, oil pump, alternator, breather, generator, hydraulic pump.

For each spur gear, the respective spur gear rotational axis may be perpendicular to and offset from the engine principal rotational axis.

The spur gear rotational axes may be disposed horizontally. Correspondingly, the first and second accessories, driven by spur gears in the accessory gear box, may be disposed to extend horizontally from the accessory gearbox.

The accessory gearbox may have a casing having a first side wall at a first side of the casing and a second side wall at a second side of the casing. An average midline may therefore be defined between the first and second side walls of the casing. The average midline of the casing may be parallel to the engine principal axis. However, the average midline of the casing may be offset from the engine radial direction. In particular, the average midline of the casing may be offset from an engine centre line, which is a line parallel to the principal rotational axis of the engine and vertically displaced from the principal rotational axis of the engine.

For the engine accessory driven by the bevel gear, this engine accessory may extend away from the accessory gearbox at an angle of about 45°. Where the spur gear rotational axes are disposed horizontally, this provides a convenient angle to make use of available space in the core annulus.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

It is to be understood here that the gearbox used to drive the fan is different from the accessory gearbox. The expression "gearbox" used in this specification is to be understood as the gearbox used to drive the fan (unless the context demands otherwise) and the expression "accessory gearbox" used in this specification is to be understood as that used to drive the accessories.

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17.

The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.
The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of descent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a sectional side view of a gas turbine engine, similar to Figure 1 but showing the lower half of the engine including the accessory gearbox;
Figure 5 shows a schematic side view of gears inside an accessory gearbox according to an embodiment, viewed from the side in a direction perpendicular to the principal axis of the engine, as for Figures 1 and 4;
Figure 6 is a schematic plan view of an accessory gearbox according to an embodiment, viewed from above in a direction perpendicular to the principal axis of the engine; and
Figure 7 is a schematic front side view of an accessory gearbox according to an embodiment, viewed from along a direction parallel to the principal axis of the engine.

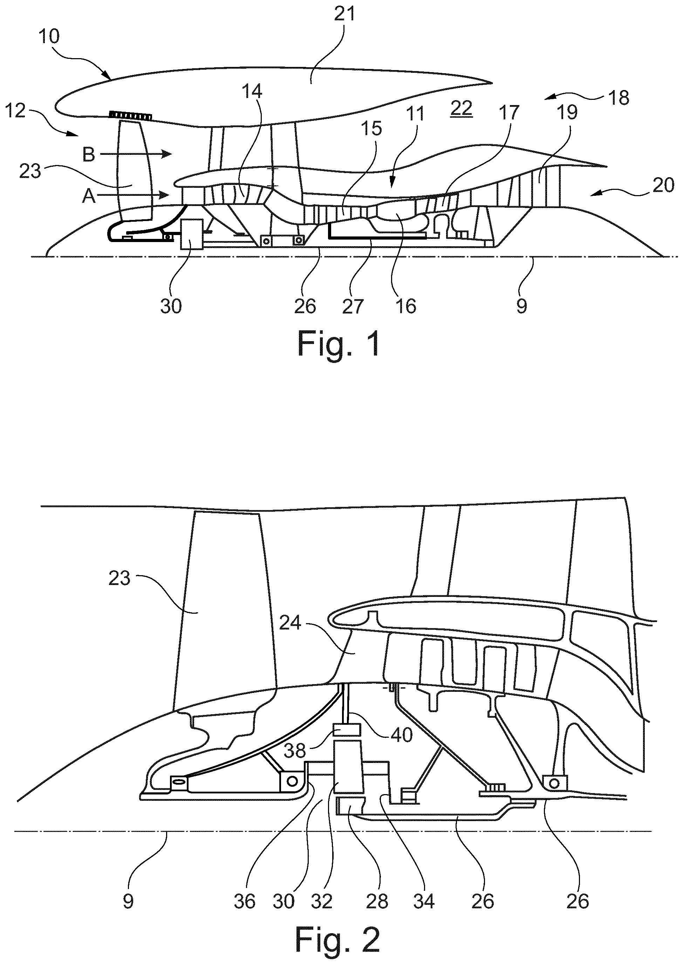

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

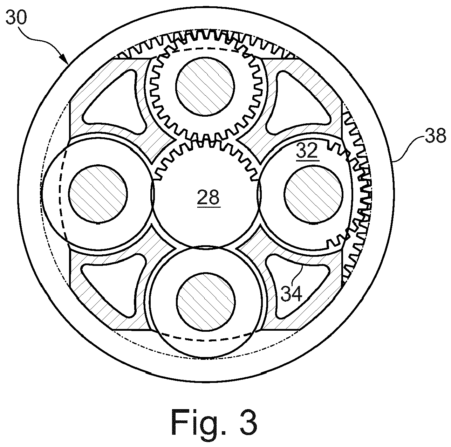

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

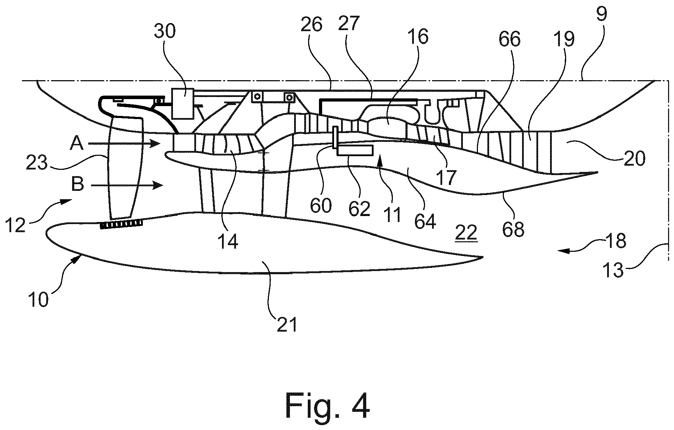

Figure 4 is a sectional side view of a gas turbine engine, similar to Figure 1 but showing the lower half of the engine including the accessory gearbox 62 fitted in the core annulus 64, defined by core annulus inner wall 66 and core annulus outer wall 68. Accessory gearbox 62 provides a mount for accessories (described later) and distributes mechanical power to, or from, each accessory unit. Power is transmitted to the accessory gearbox from the engine typically via an internal gearbox and drive shaft shown schematically as drive 60 in Figure 4. The internal gearbox includes a bevel gear linked to a rotor of the engine (e.g. at one of the compressor stages of the engine).

Typical engine-related accessories mounted at the accessory gearbox include the starter, fuel pump, oil pump, alternator and breather. Typical aircraft-related accessories mounted at the accessory gearbox include generators and hydraulic pumps.

As shown in Figure 4, accessory gearbox 62 is located in the core annulus 64, which is an enclosed annular space surrounding the core and located internally of the bypass duct 22.

The curvature of the core annulus is tighter than the curvature outside of the fan casing (which is where an accessory gearbox is conventionally located). Furthermore, the radial width of the core annulus is restricted by the core on one side and by the bypass duct on the other side. Accordingly, there is restricted space available for the accessory gearbox and for the accessories connected to the accessory gearbox.

As shown in Figure 4, the engine has an engine core 11, a bypass duct 22, an engine principal rotational axis 9 and a core annulus 64 surrounding the engine principal rotational axis 9 and radially disposed between the engine core 11 and the bypass duct 22. The engine radial direction 13 is defined as perpendicular to and intersecting the engine principal rotational axis 9. Accessory gearbox 62 is located in the core annulus.

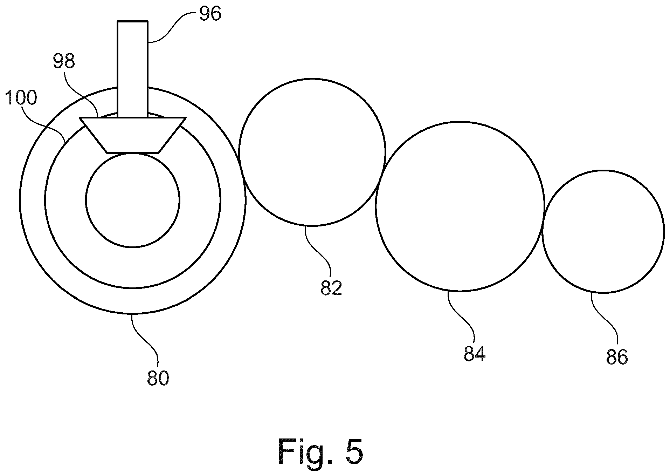

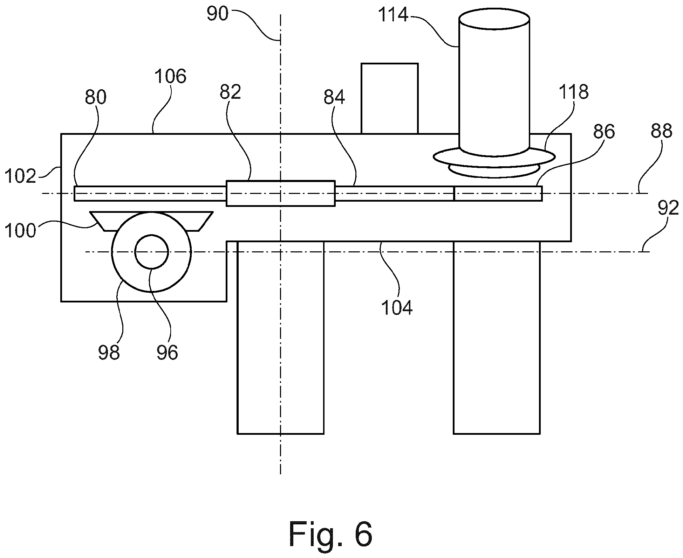

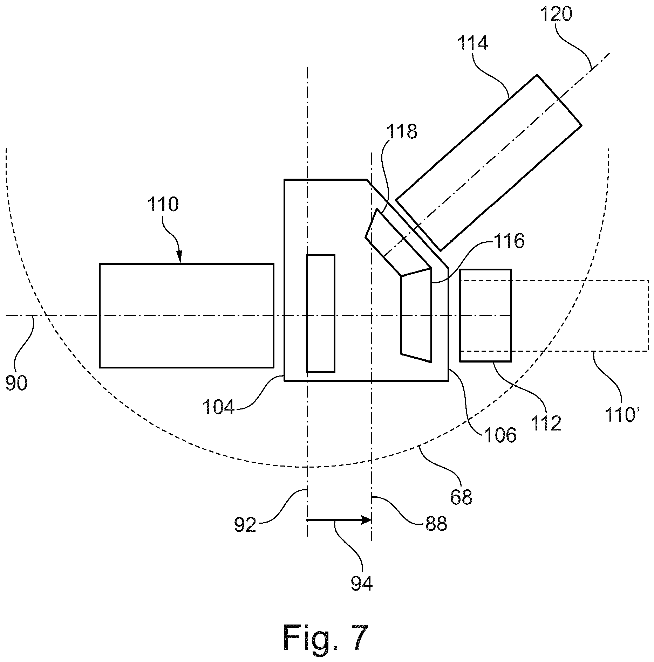

As shown in Figures 5 and 6, the accessory gearbox has a sequence of spur gears 80, 82, 84, 86, some for driving engine accessories and some for providing transmission. For each spur gear, the spur gear is mounted for rotation about a respective spur gear rotational axis that is perpendicular to the engine principal rotational axis 9. Each spur gear rotates within a respective spur gear rotational plane 88 (the plane of the page in Fig. 5) perpendicular to the spur gear rotational axis 90. Here, the spur gear rotational plane intersects the spur gear. As shown in Figures 6 and 7, the spur gear rotational plane 88 is offset with respect to the engine radial direction by distance 94.

Engine centre line 92 is shown in Figure 6.

The accessory gearbox 62 is driven by the engine by drive shaft 96 and bevel gears 98, 100

The accessory gearbox 62 has a casing 102. Casing 102 may in part intersect a radial direction of the engine. However, considering the sidewalls 104 and 106 of casing 102, the average midline of the casing 102 may be offset from the engine radial direction.

As shown in Figure 7, the effect of this offset position of the accessory gearbox is that a first accessory 110 having a first length may be mounted at a first side of the accessory gearbox (corresponding to side wall 104). However, the same first accessory 110 (shown in ghosted outline 110' in Fig. 7) may not be mounted at the opposing second side (corresponding to side wall 106) of the accessory gearbox because there is not enough space provided at the second side the accessory gearbox without interfering with the outer wall 68 of the core annulus. Therefore a second accessory 112 is mounted at the second side of the accessory gearbox. The second accessory 112 has a second length that is shorter than the first length. The second length is suitable allow the second accessory to fit in the space between the accessory gearbox and the outer wall 68 of the core annulus.

Note that the curvature of the outer wall 68 of the core annulus in Figure 7 is exaggerated in order to emphasise the manner in which the first and second accessories fit into the available space. In practice, the core annulus surrounds the engine core, the engine core containing for example a compressor stage axially aligned with the accessory gearbox.

The effect of the arrangement illustrated in Figure 7 is that the first length can be relatively long. Therefore accessories of relatively long length can be mounted on the accessory gearbox provided that the accessory gearbox is offset from an engine radial direction. The remaining relatively short second accessories can be mounted on the opposing second side of the accessory gearbox.

As shown in Figure 7, the rotational axes 90 of the first and second accessories can be horizontal. This allows the first and second accessories to be drive by spur gears. An advantage of this is that spur gears are relatively simple to manufacture, and are therefore cost-effective. The first accessory 110 and the second accessory 112, driven by spur gears in the accessory gear box, are disposed to extend horizontally from the accessory gearbox.

Figure 7 also shows a third accessory 114 mounted obliquely from horizontal at the second side of the accessory gearbox. Third accessory 114 has a relatively long length, similar to or greater than the first length of the first accessory. Its oblique mounting allows it to fit in the available space within the core annulus. In order for the third accessory to be mounted obliquely, it is driven via bevel gears 116, 118 in the accessory gearbox. Bevel gears are relatively complex to manufacture, and are therefore more expensive than spur gears. Thus, from a cost and complexity point of view, it may be preferred to limit the number of accessories mounted in this manner.

Bevel gear 118 rotates about bevel gear rotational axis 120, which extends obliquely with respect to spur gear rotational axis 90. The angle subtended between the bevel gear rotational axis 120 and the spur gear rotational axis 90 may be about 45°. Different angles may be used where convenient, to make use of available space in the core annulus.

It is possible for there to be one or more further accessories (not shown) driven by bevel gears (not shown). In that case, these further accessories may be driven about rotational axes that are parallel or non-parallel with bevel gear rotational axis 120. As the skilled person will understand, suitable rotational axes directions can be selected depending on the available space in the core annulus for the specific accessories to be driven.

The accessories may be selected from the group consisting of:
starter motor, fuel pump, oil pump, alternator, breather, generator, hydraulic pump.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. An accessory gearbox (62) for a ducted fan gas turbine engine (10), the engine having an engine core (11), a bypass duct (22), an engine principal rotational axis (9) and a core annulus (64) surrounding the engine principal rotational axis (9) and radially disposed between the engine core (11) and the bypass duct (22), wherein an engine radial direction (13) is defined as perpendicular to and intersecting the engine principal rotational axis (9), wherein:
the accessory gearbox (62) is for location in the core annulus (64),
the accessory gearbox (62) has a sequence of spur gears (80, 82, 84, 86) for driving engine accessories (110, 112),
for each spur gear, the spur gear is mounted for rotation about a respective spur gear rotational axis (90) that is non-parallel with the engine principal rotational axis (9), the spur gear rotating within a respective spur gear rotational plane (88) perpendicular to the spur gear rotational axis (90), the spur gear rotational plane intersecting said spur gear, wherein the spur gear rotational plane is offset with respect to the engine radial direction (13).

2. The accessory gearbox according to Claim 1 wherein the accessory gearbox (62) has a plurality of engine accessories (110, 112) mounted thereon.

3. The accessory gearbox according to Claim 2 wherein a first engine accessory (110) has a first axial length, a second engine accessory (112) has a second axial length, shorter than the first axial length, and the first engine accessory (110) is mounted on a first side (104) of the accessory gearbox (62) and the second engine accessory (112) is mounted on a second side (106) of the accessory gearbox (62).

4. The accessory gearbox according to Claim 3 wherein the first and second engine accessories are driven by respective spur gears of the accessory gearbox.

5. The accessory gearbox according to Claim 3 or Claim 4 having a group of said first engine accessories (110), having longer axial lengths than a group of said second engine accessories (112).

6. The accessory gearbox according to any one of Claims 2 to 5 wherein the accessories are selected from the group consisting of:
starter, fuel pump, oil pump, alternator, breather, generator, hydraulic pump.

7. The accessory gearbox according to any one of Claims 1 to 6 wherein, for each spur gear, the respective spur gear rotational axis (90) is perpendicular to and offset from the engine principal rotational axis (9).

8. The accessory gearbox according to Claim 7 wherein the spur gear rotational axes are disposed horizontally.

9. The accessory gearbox according to any one of Claims 1 to 8 wherein the accessory gearbox has a casing (102) having a first side wall (104) at a first side of the casing and a second side wall (106) at a second side of the casing and an average midline defined between the first and second side walls of the casing (102), the average midline of the casing being parallel to the engine principal axis (9) and offset from the engine radial direction (13).

10. The accessory gearbox according to any one of Claims 1 to 9 wherein the accessory gearbox has at least one bevel gear (118) for driving an engine accessory (114) mounted to the accessory gearbox, the at least one bevel gear (118) having a bevel gear rotational axis (120) that extends obliquely with respect to the spur gear rotational axes (90).

11. An accessory gearbox (62) for a ducted fan gas turbine engine (10), the engine having an engine core (11), a bypass duct (22), an engine principal rotational axis (9) and a core annulus (64) surrounding the engine principal rotational axis (9) and radially disposed between the engine core (11) and the bypass duct (22), wherein an engine radial direction (13) is defined as perpendicular to and intersecting the engine principal rotational axis (9), wherein:
the accessory gearbox (62) is for location in the core annulus (64),
the accessory gearbox (62) has a sequence of spur gears (80, 82, 84, 86), and for each spur gear, the spur gear is mounted for rotation about a respective spur gear rotational axis (90) that is non-parallel with the engine principal rotational axis (9),
the accessory gearbox has at least one bevel gear (118) for driving an engine accessory (114) mounted to the accessory gearbox, the at least one bevel gear (118) having a bevel gear rotational axis (120) that extends obliquely with respect to the spur gear rotational axes (90).

12. A gas turbine engine (10) for an aircraft incorporating an accessory gearbox according to any one of Claims 1 to 11 in the core annulus of the gas turbine engine.

13. The gas turbine engine (10) according to Claim 12 further comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft.

14. The gas turbine engine according to Claim 13, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.
